# EUROPÄISCHE PATENTSCHRIFT

(11) **EP 2 382 076 B1**
(45) Veröffentlichungstag und Bekanntmachung des Hinweises auf die Patenterteilung: **30.09.2015**
(21) Anmeldenummer: 10707431.2
(22) Anmeldetag: 18.01.2010
(51) Int. Cl.: B29C 49/12, B29C 49/42, B29C 49/78, B29K 23/00, B29K 67/00, B29C 49/16, B29C 49/36, B29C 49/64, B29C 49/06

(54) **VERFAHREN UND VORRICHTUNG ZUR BLASFORMUNG VON BEHÄLTERN**
METHOD AND DEVICE FOR BLOW-FORMING CONTAINERS
PROCÉDÉ ET DISPOSITIF DE MOULAGE PAR SOUFFLAGE DE CONTENANTS

(30) Priorität: 21.01.2009 DE 102009006508
(43) Veröffentlichungstag der Anmeldung: 02.11.2011
(73) Patentinhaber: KHS Corpoplast GmbH, 22145 Hamburg (DE)
(72) Erfinder: BAUMGARTE, Rolf, 22926 Ahrenburg (DE); LEWIN, Frank, 22889 Tangstedt (DE); LITZENBERG, Michael, 21502 Geesthacht (DE); LINKE, Michael, 22047 Hamburg (DE)
(74) Vertreter: Hausfeld, Norbert
(86) Internationale Anmeldenummer: PCT/DE2010/000053
(87) Internationale Veröffentlichungsnummer: WO 2010/083810

(56) Entgegenhaltungen:
- EP-A2- 0 426 096
- WO-A1-02/24435
- WO-A2-2008/098565
- DE-A1-102007 008 023

## Beschreibung

Die Erfindung betrifft ein Verfahren zur Blasformung von Behältern, bei dem ein Vorformling aus einem thermoplastischem Material nach einer thermischen Konditionierung innerhalb einer Blasform von einer Reckstange gereckt und durch Blasdruckeinwirkung in den Behälter umgeformt wird, sowie bei dem eine Vorgabe der Positionierung der Reckstange unter Verwendung eines Reckstangenantriebes erfolgt, und bei dem der Blasdruck unter Verwendung mindestens einer positionierbaren Blasgaszuführung erzeugt wird. Dabei ist der Reckstangenantrieb mindestens zeitweise mechanisch mit der positionierbaren Blasgaszuführung derart gekoppelt, dass eine gemeinsame Bewegung durchgeführt wird.

Die Erfindung betrifft darüber hinaus eine Vorrichtung zur Blasformung von Behältern aus einem thermoplastischen Material, die mindestens eine mit einer Blasform versehene Blasstation aufweist und die mit einer Reckeinrichtung versehen ist, in deren Bereich eine Reckstange zur Beaufschlagung eines in die Blasform einsetzbaren Vorformlings angeordnet ist und bei der die Reckstange mit einem Reckstangenantrieb verbunden ist, sowie bei der die Blasstation eine positionierbare Blasgaszuführung aufweist. Dabei ist der Reckstangenantrieb entlang mindestens eines Teiles eines Positionierweges mechanisch mit der positionierbaren Blasgaszuführung gekoppelt.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung der Bewegungskoordinierung der Reckstange kann nach unterschiedlichen Prinzipien erfolgen. Bekannt ist es beispielsweise, die Reckstange unter Verwendung von Kurvenrollen zu positionieren, die entlang von Kurvenbahnen geführt sind. Eine besonders hohe Genauigkeit und Reproduzierbarkeit des Reckvorganges lässt sich bei derartigen Kurvensteuerungen realisieren, wenn die Kurvenrollen zweiseitig geführt sind und hierdurch einer exakt definierten Bahn folgen. Derartige Kurvensteuerungen weisen aber den Nachteil auf, dass schwere und räumlich groß dimensionierte Kurvenbahnen verwendet werden müssen, die in der Regel aus Stahl gefertigt sind. Eine Umrüstung des Recksystems zur Durchführung abgeänderter Reckbewegungen verursacht einen hohen Aufwand.

Es sind ebenfalls Kurvensteuerungen bekannt, bei denen die Kurvenrollen lediglich einseitig geführt werden und unter Verwendung von Pneumatikzylindern gegen die einseitige Führungsbahn gedrückt werden.

Es liegt hier zwar eine vereinfachte und somit preiswertere und leichtere Konstruktion vor, in Abhängigkeit von den auftretenden Reckkräften kann die Kurvenrolle aber entgegen der belastenden pneumatischen Spannkraft von der Kurvenbahn abheben und der Reckvorgang verlässt hierdurch die vorgegebene Prozesscharakteristik. Hieraus resultiert eine verschlechterte Qualität der geblasenen Behälter.

Sehr genaue Recksysteme können unter Verwendung von elektrischen Linearmotoren bereitgestellt werden. Linearmotoren der erforderlichen Leistungsstärke sind derzeit jedoch noch sehr teuer und beanspruchen darüber hinaus einen großen Bauraum.

Bekannt geworden sind ebenfalls bereits reine pneumatische Recksysteme sowie Hybridsysteme, bei denen sowohl pneumatische Antriebe als auch Linearmotoren zum Einsatz kommen.

Aus der DE 10 2007 008 023 A1 sowie der WO 2008/098565 A2 ist es jeweils bekannt, eine Reckstange durch einen Linearantrieb zu positionieren und eine Positionierung der Blasgaszuführung unabhängig vom Reckstangenantrieb kurvengesteuert durchzuführen.

Die WO 02/24435 A1 beschreibt eine mechanische Positionierung der Reckstange einerseits und eine pneumatische Positionierung der Blasgaszuführung andererseits.

Die gattungsgemäße EP 0 426 096 A2 offenbart eine taktweise arbeitende Vorrichtung, bei der die Reckstangenpositionierung von zwei voneinander unabhängigen pneumatischen oder hydraulischen Antrieben bewirkt wird. Ein erster hydraulischer oder pneumatischer Antrieb positioniert die Reckstange zusammen mit der Blasgaszuführung durch Absenken einer gemeinsamen Tragplatte. Ein zweiter hydraulischer oder pneumatischer Antrieb positioniert dann die Reckstange bei dabei gleichbleibender Positionierung der Blasgaszuführung.

Für die positionierbare Blasgaszuführung werden üblicherweise pneumatische Stelleinrichtungen oder Kurvensteuerungen verwendet. Die positionierbare Blasgaszuführung wird hierbei gegen den aufzublasenden Vorformling bzw. gegen einen Kontaktbereich der Blasformen geführt und derart gegenüber dem jeweiligen Kontaktbereich verspannt, dass eine ausreichende Druckdichtigkeit bereitgestellt ist, um den Blasdruck durch Zufuhr des Blasgases aufzubauen. Eine Anordnung der Blasstationen hat derart zu erfolgen, dass sowohl ein ausreichender Bauraum für den Reckstangenantrieb als auch für den Antrieb der positionierbaren Blasgaszuführung bereitgestellt wird.

Aufgabe der vorliegenden Erfindung ist es daher, ein Verfahren der einleitend genannten Art derart anzugeben, dass eine einfache Steuereinrichtung bereitgestellt wird.

Diese Aufgabe wird erfindungsgemäß dadurch gelöst, dass eine mechanische Kopplung zwischen dem Reckstangenantrieb und der positionierbaren Blasgaszuführung über einen Mitnehmer und ein Mitnahmeprofil durchgeführt wird.

Weitere Aufgabe der vorliegenden Erfindung ist es, eine Vorrichtung der einleitend genannten Art derart zu gestalten, dass eine kompakte und zugleich einfache Steuerung bereitgestellt wird.

Diese Aufgabe wird erfindungsgemäß dadurch gelöst, dass eine mechanische Kopplung zwischen dem Reckstangenantrieb und der positionierbaren Blasgaszuführung über einen Mitnehmer und ein Mitnahmeprofil durchgeführt wird.

Die Kopplung des Reckstangenantriebes mit der positionierbaren Blasgaszuführung ermöglicht es, auf einen separaten Antrieb für die Blasgaszuführung zu verzichten. Dies führt zu erheblichen Einsparungen, da entweder ein separater Antrieb für jede der positionierbaren Blasgaszuführungen an jeder Blasstation entfällt oder eine große und schwere Steuerkurve entfallen kann, entlang derer Kurvenrollen der positionierbaren Blasgaszuführungen entlang geführt werden. Eine einfach koppel- und entkoppelbare Verbindung zwischen der positionierbaren Blasgaszuführung und dem Reckstangenantrieb wird dadurch bereitgestellt, dass die mechanische Kopplung zwischen dem Reckstangenantrieb und der positionierbaren Blasgaszuführung über einen Mitnehmer und ein Mitnahmeprofil durchgeführt ist.

Darüber hinaus entfällt der erforderliche Bauraum für separate Stelleinrichtungen für die positionierbaren Blasgaszuführungen, so dass entweder die Zugänglichkeit der Blasstationen verbessert oder eine kompaktere Anordnung der Blasstationen unterstützt wird. Schließlich wird durch die erfindungsgemäße Kopplung auch die Servicefreundlichkeit erhöht, da die Blasmaschine weniger verschleißbehaftete Baugruppen aufweist.

Vorgebbare Bewegungsabläufe, die gegebenenfalls unter Verwendung einer Programmiereinrichtung variabel sind, können dadurch realisiert werden, dass die Reckstange mit einer Steuerung zur Vorgabe einer Reckstangenbewegung entsprechend einem Bewegungsprofil gekoppelt ist.

Vergrößerte verfahrenstechnische Freiheiten bei einer Vorgabe des Bewegungsweges der Reckstange einerseits und der positionierbaren Blasgaszuführung andererseits werden dadurch bereitgestellt, dass ein Positionierweg der Reckstange in einen ersten Bereich, der einer gemeinsamen Positionierung mit der Blasgaszuführung und in einen zweiten Bereich, der ausschliesslich einer Positionierung der Reckstange zugeordnet ist, aufgeteilt wird.

Eine mechanisch robuste und zugleich an unterschiedliche Anforderungen einfach adaptierbare Ausführungsvariante wird dadurch bereitgestellt, dass die Reckstange von einer Gewindestange positioniert wird.

Eine weitere äußerst robuste Realisierung besteht darin, dass die Reckstange von einer Kurvensteuerung positioniert wird.

Ebenfalls ist daran gedacht, dass die Reckstange von einem pneumatischen Antrieb positioniert wird.

Zur Fixierung der positionierbaren Blasgaszuführung in einer bestimmten Arbeitspositionierung ohne aktive Haltekräfte wird vorgeschlagen, dass die positionierbare Blasgaszuführung in einer in Richtung auf die Blasform positionierten Anordnung von einem Kniehebel fixiert wird.

Ebenfalls ist daran gedacht, dass die positionierbare Blasgaszuführung in einer der Richtung auf die Blasform abgewandten Anordnung von einem Kniehebel fixiert wird.

Eine exakte Einhaltung vorgegebener Bewegungsabläufe kann dadurch unterstützt werden, dass ein Positionierweg der Reckstange von einer Schlittenführung stabilisiert wird.

Eine mechanisch einfache Realisierung erfolgt dadurch, dass der Mitnehmer ausschliesslich während eines Teiles seines Bewegungsweges in das Mitnahmeprofil eingreift.

Eine vorteilhafte Kraftübertragung wird dadurch bereitgestellt, dass das Mitnahmeprofil durch eine Anordnung im Bereich eines verschwenkbaren Stellhebels eine Bewegung des Mitnehmers in eine Bewegung der positionierbaren Blasgaszuführung transformiert.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

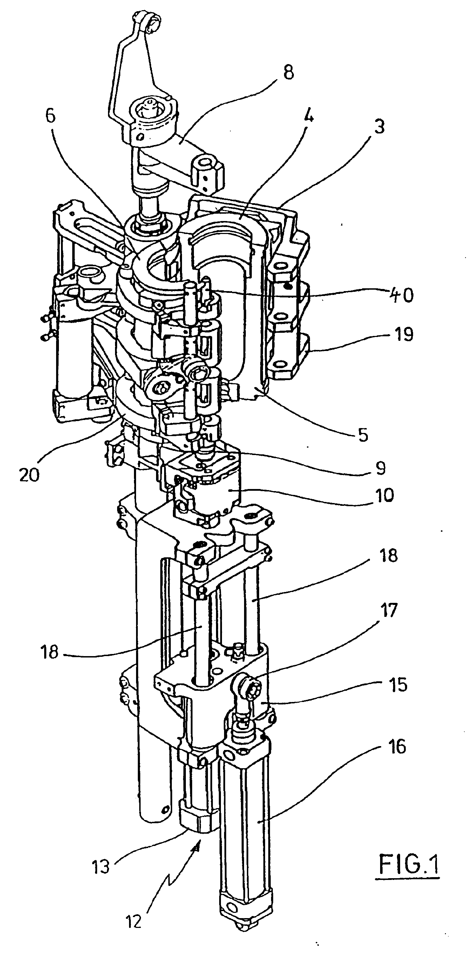

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedruckt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

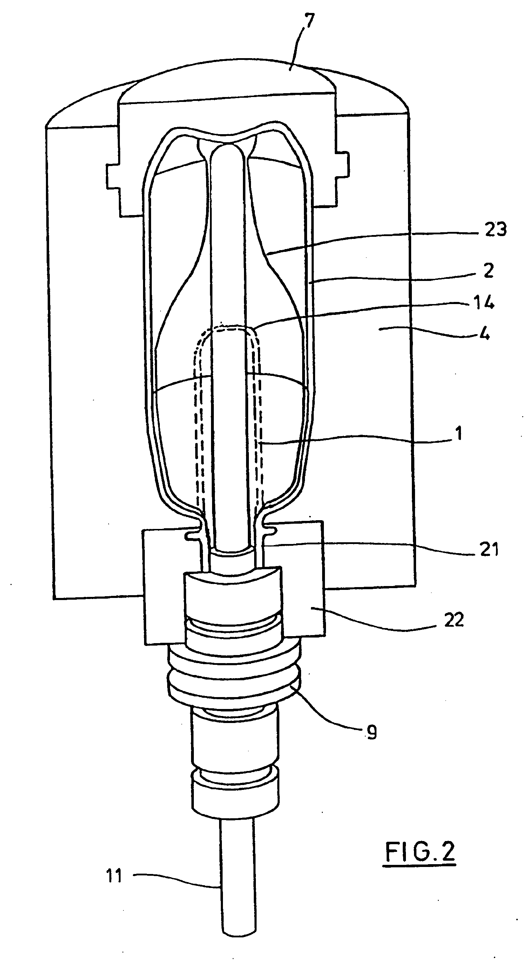

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

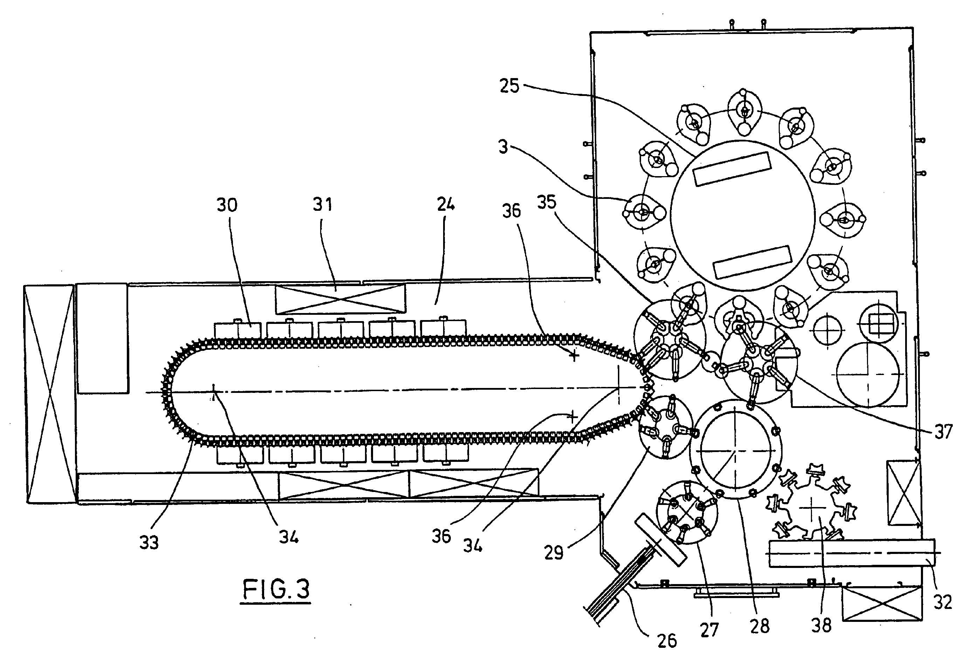

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) vier Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

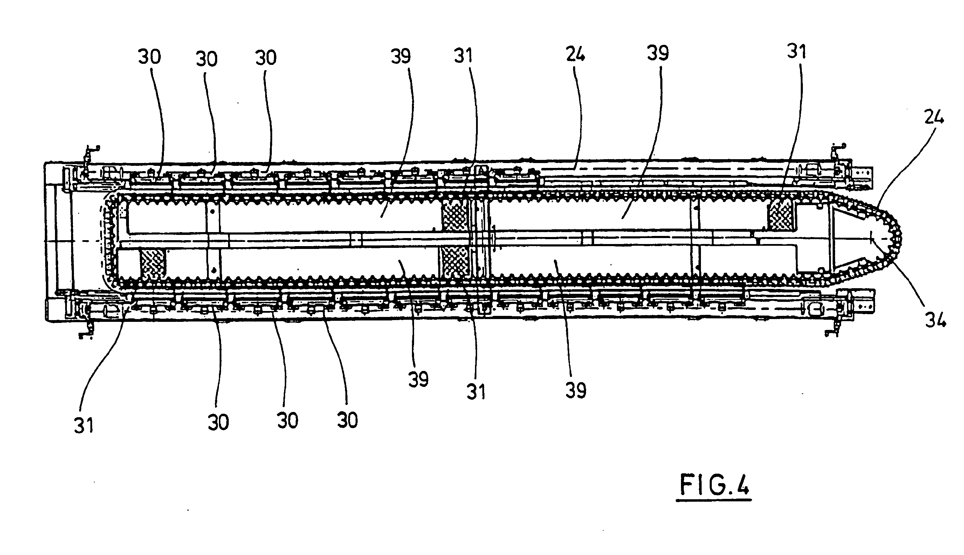

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

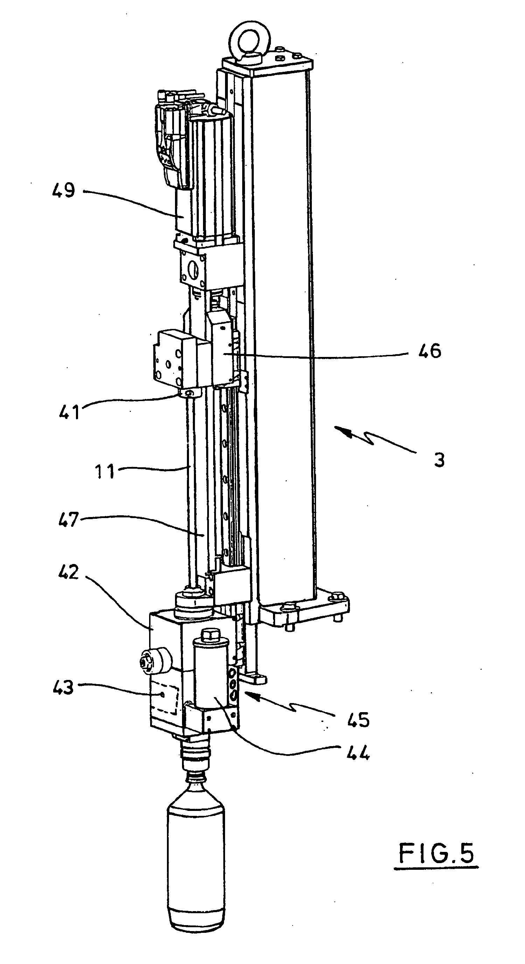

Fig. 5 zeigt eine gegenüber der Darstellung in Fig. 1 abgewandelte Darstellung der Blasstation (3) bei einer perspektivischen Blickrichtung von vorne. Insbesondere ist aus dieser Darstellung erkennbar, daß die Reckstange (11) von einem Reckstangenträger (41) gehaltert ist.

Fig. 5 zeigt ebenfalls die Anordnung eines Pneumatikblockes (46) zur Blasdruckversorgung der Blasstation (3). Der Pneumatikblock (42) ist mit Hochdruckventilen (43) ausgestattet, die über Anschlüsse (44) an eine oder mehrere Druckversorgungen angeschlossen werden können. Nach einer Blasformung der Behälter (2) wird in eine Umgebung abzuleitende Blasluft über den Pneumatikblock (42) zunächst einem Schalldämpfer (45) zugeführt.

Eine typische Durchführung des Blasvorganges kann am einfachsten anhand von Fig. 2 veranschaulicht werden. Nach einem Einsetzen des Vorformlings (1) in die Blasform (4) und einer Verriegelung der Blasstation (3) erfolgt zunächst ein Hineinfahren der Reckstange (11) in den Vorformling (1) bei gleichzeitiger Blasdruckunterstützung derart, daß der Vorformling (1) durch die axiale Reckung nicht auf die Reckstange (11) radial aufschrumpft.

Nach der in Fig. 2 dargestellten vollständigen Durchführung des Reckvorganges erfolgt die vollständige Expansion der Behälterblase (23) in die Endkontur des Behälters (2) und der maximale Innendruck wird so lange aufrecht erhalten, bis der Behälter (2) durch Abkühlung eine ausreichende Formstabilität erreicht hat. Nach dem Erreichen dieser Formstabilität wird die Blasdruckzufuhr abgeschaltet und die Reckstange (11) wird wieder aus der Blasform (4) und somit aus dem geblasenen Behälter (2) zurückgezogen.

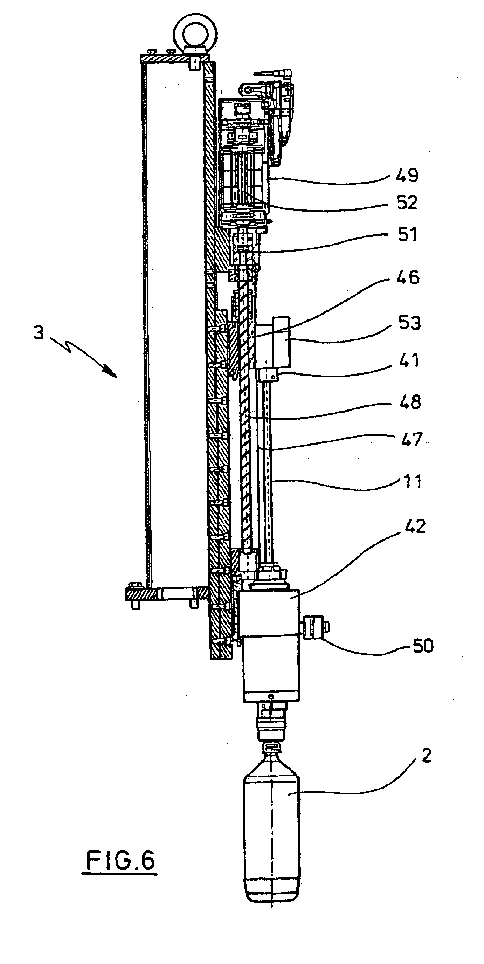

Fig. 5 veranschaulicht ebenfalls, daß der Reckstangenträger (41) mit einem Kopplungselement (46) verbunden ist, das mindestens bereichsweise hinter einer Abdeckung (47) geführt ist. Das Kopplungselement (46) ist unter Verwendung einer in Fig. 5 nicht erkennbaren Gewindestange (48) von einem Servomotor (49) positionierbar. Die Anordnung der Gewindestange (48) wird nachfolgend unter Bezugnahme auf Fig. 6 weiter erläutert.

Fig. 6 zeigt einen Längsschnitt durch die Anordnung gemäß Fig. 5. Seitlich am Pneumatikblock (42) ist eine Kurvenrolle (50) erkennbar, die zu einer mechanischen Positionierung des Pneumatikblockes (42) dient. Insbesondere wird hiermit ein Anheben bzw. Absenken des Pneumatikblockes (42) relativ zum Behälter (2) bzw. zum Vorformling (1) vorgegeben.
Das Kopplungselement (46) ist beim dargestellten Ausführungsbeispiel als eine Gewindebuchse ausgeführt, die mit einem Innengewinde in ein Außengewinde der Gewindestange (48) eingreift. Das Kopplungselement (46) erstreckt sich mit Verbindungsschenkeln bereichsweise seitlich neben der Abdeckung (47) und ist hierdurch mit dem Reckstangenträger (41) verbunden. Die Abdeckung (47) schirmt die Reckstange (11) gegenüber der Gewindestange (48) ab, so daß eine Verunreinigung der Reckstange (11) beispielsweise durch von der Gewindestange (48) ausgehende Fett- oder Ölpartikel vermieden wird. Alternativ zu der Gewindestange (48) kann auch eine Gewindespindel verwendet werden.

Die Gewindestange (48) ist über eine Kupplung (51) mit einer Motorwelle (52) des Servomotors (49) verbunden. Beim dargestellten Ausführungsbeispiel erstrecken sich die Motorwelle (52) und die Gewindestange (48) entlang einer gemeinsamen Längsachse, so daß die Gewindestange (48) als Verlängerung der Motorwelle (52) angeordnet ist. Hierdurch wird insbesondere eine getriebelose Verbindung der Motorwelle (52) mit der Gewindestange (48) unterstützt.

Außenseitig am Reckstangenträger (41) ist ein Pneumatikventil (53) angeordnet, um gegebenenfalls durch die Reckstange (11) hindurch ein gasförmiges Medium in Richtung auf den Vorformling (1) bzw. den Behälter (2) zu leiten bzw. in umgekehrter Richtung abzuführen. Es kann sich hierbei beispielsweise um Blasluft oder um Kühlluft handeln.

Die Kopplung des Servomotors (49) über die Gewindestange (48), das Kopplungselement (46) und den Reckstangenträger (41) mit der Reckstange (11) stellt ein gegenüber äußeren Belastungen starres und dennoch hoch dynamisches System bereit.

Aus einer meßtechnischen Erfassung des Motorstromes des Servomotors (49) kann in einfacher Weise auf eine aktuelle Reckkraft zurückgeschlossen werden. Insbesondere ist es hierdurch möglich, nicht nur die Durchführung eines Reckvorganges in Abhängigkeit von einem vorgegebenen Positionierungsprofil, sondern von einem vorgegebenen Kraftprofil vorzunehmen. Es kann hierbei beispielsweise vorgegeben werden, entlang vorgegebener Abschnitte des Reckweges eine konstante Reckkraft oder eine vorgegebene veränderliche Reckkraft zu generieren. In Abhängigkeit von der durch die Erfassung des Motorstromes meßtechnisch erfaßten Reckkraft kann ebenfalls in geeigneter Weise eine Blasdruckzuführung gesteuert werden, da die konkret auftretenden Reckkräfte einen Indikator für eine optimale Blasdruckzufuhr darstellen.

Gemäß einer weiteren Ausführungsvariante ist es möglich, den Servomotor (49) bei einer von einem Innendruck des Behälters (2) unterstützten Rückführung der Reckstange (11) generatorisch zu betreiben und hierdurch eine Energierückspeisung vorzunehmen. Es kann hierdurch die elektrische Betriebsenergie für eine Mehrzahl verwendeter Servomotoren (49) vermindert werden.

Gemäß einer weiteren Ausführungsform der Erfindung ist daran gedacht, bei einer Anordnung der Blasstation (3) auf einem rotierenden Blasrad (25) eine zentrale Energieversorgung für die Servomotoren (49) auf dem Blasrad (25) anzuordnen. Ebenfalls kann eine für den Betrieb der Servomotoren (49) verwendete Steuereinheit auf dem Blasrad (25) positioniert werden. Gemäß einer weiterhin bevorzugten Ausführungsform ist jeder der Servomotoren (49) mit einer unmittelbar benachbart zum jeweiligen Servomotor (49) angeordneten Steuerung ausgestattet.

Eine externe Vorgabe von Steuerungswerten erfolgt unter Verwendung eines Bussystems, das die auf dem Blasrad (25) angeordnete Steuereinheit mit einer stationären Hauptsteuerung verbindet. Die auf dem Blasrad (25) angeordnete Energieversorgung für die einzelnen Servomotoren (49) kann über eine Schleifringkopplung mit einer stationär angeordneten Energiequelle verbunden werden.

Gemäß einer bevorzugten Ausführungsform wird die Gewindestange (48) mit einer gleichen Drehzahl wie die Motorwelle (52) betrieben. Grundsätzlich ist aber auch die Verwendung eines Getriebes zu Kopplung dieser beiden Bauelemente denkbar. Abweichend vom dargestellten Ausführungsbeispiel können die Motorwelle (52) und die Gewindestange (48) mit ihren jeweiligen Längsachsen auch quer oder schräg zueinander angeordnet werden, wenn über geeignete Kopplungselemente eine erforderliche kraftschlüssige Verbindung hergestellt wird.

Die bereits erwähnte Steuerung des Blasvorganges in Abhängigkeit von Zustandsdaten des Reckvorganges kann beispielsweise auch derart durchgeführt werden, daß die Zuschaltung des Vorblasdruckes und/oder des Hauptblasdruckes in Abhängigkeit von einer konkreten Positionierung der Reckstange (11) erfolgt. Hierzu ist es nicht erforderlich, die tatsächliche Position der Reckstange (11) selbst zu messen, sondern durch Auswertung von Meßdaten eines Inkrementalgebers, der im Bereich des Servomotors (49) angeordnet ist, kann die aktuelle Position der Reckstange (11) ermittelt werden. Bei Erreichen einer vorgegebenen Position der Reckstange (11) wird ein zugeordnetes Blasgasventil geschaltet.

Bei den vorstehend erläuterten Ausführungsbeispielen ist jeder Blasstation (3) ein eigenes Recksystem mit Reckstange (11), Gewindestange (48) und Servomotor (49) zugeordnet. Bei einer Anordnung der mit dem Erfindungsgemäßen Recksystem ausgestatteten Blasstationen (3) auf einem Blasrad (25) ist es insbesondere in einfacher Weise möglich, die Durchführung des Reckvorganges automatisch an unterschiedliche Produktionsraten und damit unterschiedlich Drehzahlen des Blasrades (25) anzupassen. Prozeßtechnisch erweist es sich als ungünstig, bei einer Veränderung der Drehzahl des Blasrades (25) auch den Reckvorgang mit unterschiedlichen Reckgeschwindigkeiten durchzuführen, da hierdurch die Materialeigenschaften der hergestellten Behälter (2) beeinflußt würden. Es wird somit angestrebt, auch bei unterschiedlichen Drehzahlen des Blasrades (25) den Reckvorgang mit vorgegebenen Reckgeschwindigkeiten oder Reckkräften zu realisieren. Die Verwendung des erfindungsgemäßen Recksystems mit Servomotor (49) und Gewindestange (48) erlaubt es in einfacher Weise, über eine Maschinensteuerung eine von der Drehzahl des Blasrades (25) unabhängige Vorgabe der Reckparameter zu realisieren. Auch für vorgebbare und variierende Ausstoßleistungen der Maschine kann hierdurch eine hohe Qualität der hergestellten Behälter (2) gewährleistet werden.

Gemäß einer weiteren Ausführungsform ist daran gedacht, bei einer Ausstattung der Blasmaschine mit einer Bedieneinrichtung, beispielsweise einer Visualisierung, von einem Bediener Reckweg-Zeit-Profile, Reckkraft-Zeit-Profile, Reckkraft-Reckweg-Profile oder andere Profile für Reckparameter vorzugeben und unter Verwendung des erfindungsgemäßen Recksystems mit hoher Genauigkeit umzusetzen.

Hinsichtlich des Servomotors (49) ist es gemäß einem Ausführungsbeispiel möglich, einen verwendeten Regler unmittelbar in den Motor zu integrieren. Alternativ zu der erläuterten Anordnung der Gewindestange (48) als Verlängerung der Motorwelle (52) und einer ebenfalls bereits erläuterten schrägen oder rechtwinkligen Anordnung des Servomotors (49) relativ zur Gewindestange (48) unter Zwischenschaltung eines Getriebes oder anderer Kopplungselemente ist es auch möglich, zur Erreichung einer kompakten Ausführungsform den Motor seitlich neben der Gewindestange (48) anzuordnen und über ein Doppel-Winkelgetriebe oder geeignete andere Kopplungseinrichtungen die erforderliche Kopplung des Servomotors (18) mit der Gewindestange (48) zu realisieren.

Gemäß einer bevorzugten Ausführungsform der Erfindung ist insbesondere daran gedacht, die aus dem Kopplungselement (46) und der Gewindestange (48) ausgebildete Baugruppe entsprechend einer Kugelgewindespindel auszuführen. Das Kopplungselement (46) weist hierbei ein Innengewinde entsprechend einer Schraubenmutter auf, das in ein Außengewinde der Gewindestange (48) eingreift. Ein unmittelbarer Kontakt der Gewindegänge des Innengewindes des Kopplungselementes (46) und des Außengewindes der Gewindestange (48) miteinander kann dadurch vermieden werden, daß im Gewindebereich Kugeln ähnlich wie bei einem Kugellager angeordnet sind. Hierdurch gleiten das Innengewinde und daß Außengewinde nicht unmittelbar aufeinander und generieren hierbei Gleitreibungen, sondern es wird eine wesentlich geringere Rollreibung realisiert.

Zur Unterstützung einer kompakten und preiswerten Ausführungsform werden die Kugeln vorzugsweise im Bereich des Innengewindes des Kopplungselementes (46) angeordnet.

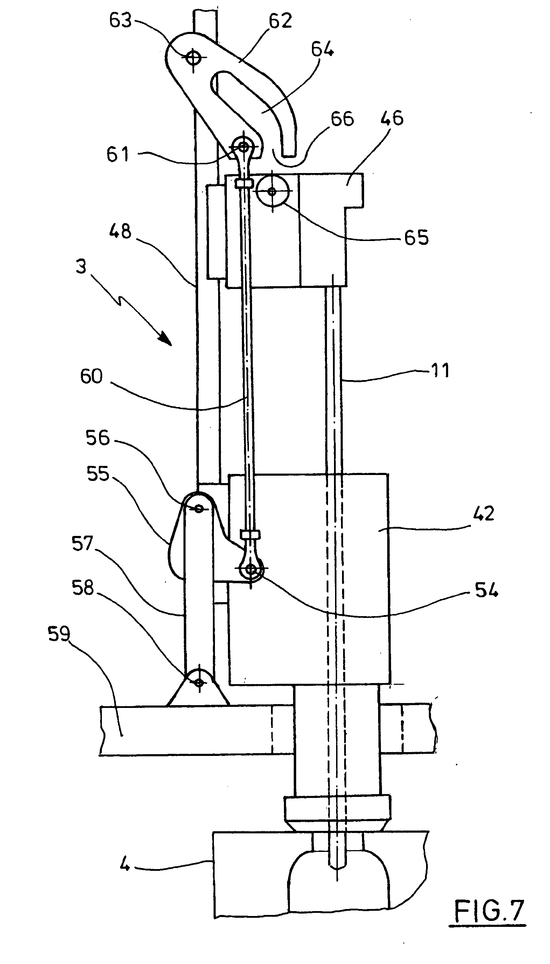

Fig. 7 zeigt eine Seitenansicht einer schematisch dargestellten Blasstation (3), bei der eine Reckstange (11) über ein Kopplungselement (46) mit einer schematisch dargestellten Gewindestange (48) zur Positionierung verbunden ist. Die Reckstange ist im dargestellten Betriebszustand teilweise in eine Blasform (4) eingefahren. Fig. 7 zeigt ebenfalls schematisch einen Pneumatikblock (42), der als ein sogenannter Anschlußkolben ausgeführt sein kann und der zur Zuführung von Druckluft in den Innenraum des zu blasenden Behälters (2) hinein vorgesehen ist. Der Pneumatikblock (42) ist über nicht dargestellte Versorgungsleitungen an eine Blasgasversorgung angeschlossen und dient als relativ zur Blasform (4) positionierbar angeordnete Blasgaszuführung. Die Positionierbarkeit ist erforderlich, damit nach einem Einsetzen eines Vorformlings (1) in die Blasform (4) durch eine Hubbewegung eine druckdichte Verbindung zwischen dem Pneumatikblock (42) und der Blasform (4) bzw. zwischen dem Pneumatikblock (42) und dem Vorformling (1) bzw. dem zu blasenden Behälter (2) hergestellt werden kann.

Gemäß der Ausführungsform in Fig. 7 ist der Pneumatikblock (42) über ein Schwenkgelenk (54) mit einem Querhebel (55) verbunden. Der Querhebel (55) ist über ein Gelenk (56) mit einem Längshebel (57) verbunden, der seinerseits über ein Gelenk (58) mit einer Tragstruktur (59) der Blasstation (3) gekoppelt ist. Der Längshebel (57) erstreckt sich im wesentlichen mit einer Hebellängsachse im wesentlichen parallel zu einer Längsachse der Gewindestange (48).

Der Pneumatikblock (42) ist zusätzlich gelenkig mit einer Positionierstange (60) verbunden. Die gelenkige Verbindung wird vorzugsweise im Bereich des Gelenkes (54) realisiert. Die Positionierstange (60) ist im Bereich ihrer dem Pneumatikblock (42) abgewandten Ausdehnung über ein Gelenk (61) mit einem Stellhebel (62) verbunden, der über ein Gelenk (63) verschwenkbar mit der Tragstruktur (59) der Blasstation (1) gekoppelt ist.

Der Stellhebel (62) weist ein Mitnahmeprofil (64) auf, das beispielsweise durch eine u-förmige Gestaltung des Stellhebels (62) realisiert sein kann. Es können aber auch nutartige Vertiefungen oder entsprechende Führungsvorsprünge vorgesehen sein. Das Mitnahmeprofil (64) ist für einen formschlüssigen Kontakt mit einem Mitnehmer (65) vorgesehen, der im Bereich des Kopplungselementes (46) angeordnet ist.

Gemäß einer bevorzugten Ausführungsform ist der Mitnehmer (65) als eine Kurvenrolle ausgeführt und das Mitnahmeprofil (64) ist als eine Kurvenbahn mit einer an den Mitnehmer (65) angepaßten Dimensionierung versehen. Insbesondere ist daran gedacht, das Mitnahmeprofil (64) mit einer im wesentlichen in lotrechter Richtung nach unten weisenden Einführöffnung (66) und einer sich anschließenden und sich mit einem leicht gebogenen Verlauf erstreckenden Kurvenbahn auszustatten.

Hinsichtlich der Ausbildung des Längshebels (57) und des Querhebels (55) ist insbesondere daran gedacht, hier eine Anordnung und Dimensionierung entsprechend einem Kniehebel vorzunehmen.

Gemäß dem in Fig. 7 dargestellten Betriebszustand ist der Pneumatikblock (42) abgesenkt und abgedichtet gegen die Blasform (4) bzw. den vorformling (1) geführt. In diesem Betriebszustand kann eine Expansion des Vorformlings (1) zum Behälter (2) durch eine Druckgaszufuhr erfolgen. Der aus dem Querhebel (55) und dem Längshebel (57) ausgebildete Kniehebel befindet sich in einer Übertotpunktlage und fixiert hierdurch den Pneumatikblock (42) ohne weitere Stell- oder Haltekräfte in der dargestellten Positionierung. Die Reckstange (11) ist in Fig. 7 nach einem bereits erfolgten teilweisen Zurückziehen aus der Blasform (4) dargestellt. Der Mitnehmer (65) und das Mitnahmeprofil (64) sind entkoppelt, so daß Positionierbewegungen des Kopplungselementes (46) bzw. der mit diesem verbundenen Reckstange (11) keine Bewegungen des Pneumatikblockes (42) verursachen.

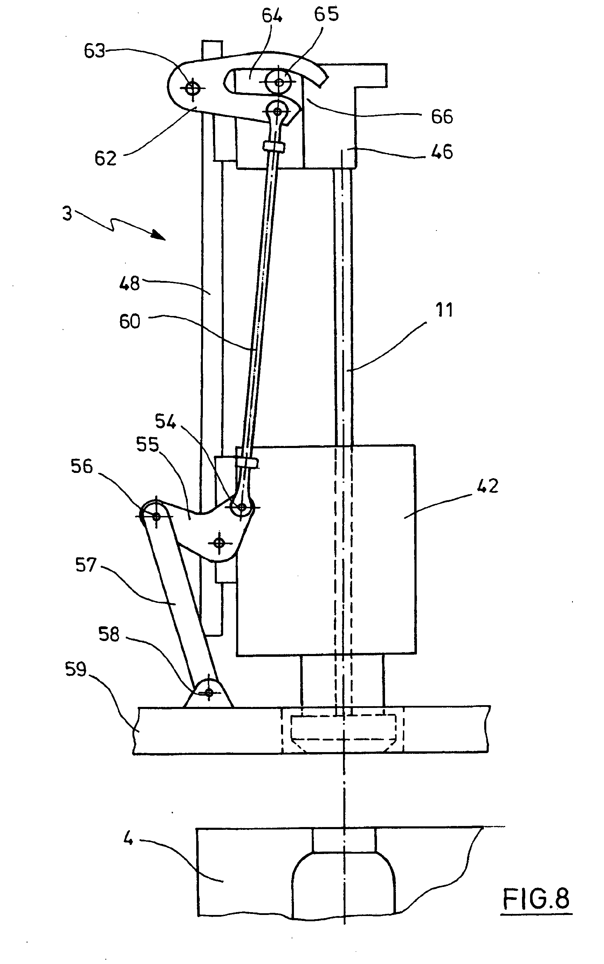

Fig. 8 zeigt eine Ausführungsform, bei der die Reckstange (11) unter Verwendung des Kopplungselementes (46) durch eine zugeordnete Drehbewegung der Gewindestange (48) bereits vollständig aus dem Bereich der Blasform (4) entfernt ist. Bei einer entsprechenden Hubbewegung der Reckstange (11) wird der Mitnehmer (65) zunächst in die Einführöffnung (66) eingeführt und gleitet anschließend entlang des Mitnahmeprofils (64) ab. Aufgrund der gelenkigen Befestigung des Stellhebels (62) über das Gelenk (63) an der Tragstruktur (59) der Blasstation (3) verursacht der Mitnehmer (65) eine Schwenkbewegung des Stellhebels (62). Die Schwenkbewegung des Stellhebels (62) wird über das Gelenk (61) in eine Hubbewegung der Positionierstange (60) transformiert. Die Positionierstange (60) hebt hierdurch den Pneumatikblock (42) an und entfernt diesen von der Blasform (4). Gleichzeitig wird die Kombination aus dem Querhebel (55) und dem Längshebel (57) aus der Übertotpunktlage weggeschwenkt.

Zur Durchführung einer erneuten Blasformung erfolgt nach dem Einsetzen eines neuen Vorformlings (1) in die Blasform (4) wieder ein Absenken der Reckstange (11) und damit auch ein Absenken des Pneumatikblockes (42). In der vollständig abgesenkten Positionierung des Pneumatikblocks (42) nimmt der aus dem Querhebel (55) und dem Längshebel (57) ausgebildete Kniehebel wieder seine Übertotpunktlage ein und fixiert den Pneumatikblock (42). Der Mitnehmer (65) verläßt wieder das Mitnahmeprofil (64) durch die Einführöffnung (66) und die Reckstange (11) kann weiter in die Blasform (4) hinein verfahren werden, ohne daß eine weitere Kopplung mit dem Pneumatikblock (42) erfolgt.

## Patentansprüche

1. Verfahren zur Blasformung von Behältern (2), bei dem ein Vorformling (1) aus einem thermoplastischem Material nach einer thermischen Konditionierung innerhalb einer Blasform (4) von einer Reckstange (11) gereckt und durch Blasdruckeinwirkung in den Behälter (2) umgeformt wird, sowie bei dem eine Vorgabe der Positionierung der Reckstange (11) unter Verwendung eines Reckstangenantriebes erfolgt, und bei dem der Blasdruck unter Verwendung mindestens einer positionierbaren Blasgaszuführung erzeugt wird, wobei der Reckstangenantrieb mindestens zeitweise mechanisch mit der positionierbaren Blasgaszuführung derart gekoppelt ist, dass eine gemeinsame Bewegung durchgeführt wird, **dadurch gekennzeichnet, dass** die mechanische Kopplung zwischen dem Reckstangenantrieb und der positionierbaren Blasgaszuführung über einen Mitnehmer (65) und ein Mitnahmeprofil (64) durchgeführt wird..

2. Verfahren nach Anspruch 1, **dadurch gekennzeichnet, dass** die Reckstange (11) mit einer Steuerung zur Vorgabe einer Reckstangenbewegung entsprechend einem Bewegungsprofil gekoppelt ist.

3. Verfahren nach Anspruch 1 oder 2, **dadurch gekennzeichnet, dass** ein Positionierweg der Reckstange (11) in einen ersten Bereich, der einer gemeinsamen Positionierung mit der Blasgaszuführung und in einen zweiten Bereich, der ausschliesslich einer Positionierung der Reckstange (11) zugeordnet ist, aufgeteilt wird.

4. Verfahren nach einem der Ansprüche 1 bis 3, **dadurch gekennzeichnet, dass** die Reckstange (11) von einer Gewindestange (48) positioniert wird.

5. Verfahren nach einem der Ansprüche 1 bis 3, **dadurch gekennzeichnet, dass** die Reckstange (11) von einer Kurvensteuerung positioniert wird.

6. Verfahren nach einem der Ansprüche 1 bis 3, **dadurch gekennzeichnet, dass** die Reckstange (11) von einem pneumatischen Antrieb positioniert wird.

7. Verfahren nach einem der Ansprüche 1 bis 6, **dadurch gekennzeichnet, dass** die positionierbare Blasgaszuführung in einer in Richtung auf die Blasform (4) positionierten Anordnung von einem Kniehebel fixiert wird.

8. Verfahren nach einem der Ansprüche 1 bis 6, **dadurch gekennzeichnet, dass** die positionierbare Blasgaszuführung in einer der Richtung auf die Blasform (4) abgewandten Anordnung von einem Kniehebel fixiert wird.

9. Verfahren nach einem der Ansprüche 1 bis 8, **dadurch gekennzeichnet, dass** ein Positionierweg der Reckstange (11) von einer Schlittenführung stabilisiert wird.

10. Verfahren nach einem der Ansprüche 1 bis 9, **dadurch gekennzeichnet, dass** der Mitnehmer (65) ausschliesslich während eines Teiles seines Bewegungsweges in das Mitnahmeprofil (64) eingreift.

11. Verfahren nach einem der Ansprüche 1 bis 10, **dadurch gekennzeichnet, dass** das Mitnahmeprofil (64) durch eine Anordnung im Bereich eines verschwenkbaren Stellhebels (62) eine Bewegung des Mitnehmers (65) in eine Bewegung der positionierbaren Blasgaszuführung transformiert.

12. Vorrichtung zur Blasformung von Behältern (2) aus einem thermoplastischen Material, die mindestens eine mit einer Blasform (4) versehene Blasstation (3) aufweist und die mit einer Reckeinrichtung versehen ist, in deren Bereich eine Reckstange (11) zur Beaufschlagung eines in die Blasform (4) einsetzbaren Vorformlings (1) angeordnet ist und bei der die Reckstange (11) mit einem Reckstangenantrieb verbunden ist, sowie bei der die Blasstation (3) eine positionierbare BlasgasZuführung aufweist, wobei der Reckstangenantrieb entlang mindestens eines Teiles eines Positionierweges mechanisch mit der positionierbaren Blasgaszuführung gekoppelt ist, **dadurch gekennzeichnet, dass** die positionierbare Blasgaszuführung und der Reckstangenantrieb von einem Mitnehmer (65) gekoppelt sind, der in ein Mitnahmeprofil (64) eingreift..

13. Vorrichtung nach Anspruch 12, **dadurch gekennzeichnet, dass** die Reckstange (11) mit einem steuerbaren Antrieb zur Realisierung eines Bewegungsablaufes entsprechend einem vorgegebenen Bewegungsprofil gekoppelt ist.

14. Vorrichtung nach Anspruch 12 oder 13, **dadurch gekennzeichnet, dass** ein Positionierweg der Reckstange (11) in einen ersten Bereich und einen zweiten Bereich unterteilt ist, wobei die Reckstange (11) im ersten Bereich mechanisch mit der positionierbaren Blasgaszuführung gekoppelt ist und im zweiten Bereich eine Entkopplung vorliegt.

15. Vorrichtung nach einem der Ansprüche 12 bis 14, **dadurch gekennzeichnet, dass** der Reckstangenantrieb eine rotationsfähig gelagerte Gewindestange (48) aufweist.

16. Vorrichtung nach einem der Ansprüche 12 bis 14, **dadurch gekennzeichnet, dass** der Reckstangenantrieb eine Kurvensteuerung aufweist.

17. Vorrichtung nach einem der Ansprüche 12 bis 14, **dadurch gekennzeichnet, dass** der Reckstangenantrieb einen pneumatischen Antrieb aufweist.

18. Vorrichtung nach einem der Ansprüche 12 bis 17, **dadurch gekennzeichnet, dass** die positionierbare Blasgaszuführung mit einem Kniehebel zur Positionsfestlegung in einem in Richtung auf die Blasform (4) positionierten Zustand versehen ist.

19. Vorrichtung nach einem der Ansprüche 12 bis 18, **dadurch gekennzeichnet, dass** die positionierbare Blasgaszuführung mit einem Kniehebel zur Positionsfestlegung in einem in einer der Blasform (4) abgewandten Richtung positionierten Zustand versehen ist.

20. Vorrichtung nach einem der Ansprüche 12 bis 19, **dadurch gekennzeichnet, dass** das Recksystem eine Schlittenführung aufweist.

21. Vorrichtung nach einem der Ansprüche 12 bis 20, **dadurch gekennzeichnet, dass** das Mitnahmeprofil (64) eine geringere Länge als die Ausdehnung eines Positionierweges des Mitnehmers (65) aufweist.

22. Vorrichtung nach einem der Ansprüche 12 bis 21, **dadurch gekennzeichnet, dass** das Mitnahmeprofil (64) im Bereich eines verschwenkbar gelagerten Stellhebels (62) angeordnet ist.

## Claims

1. Method for the blow moulding of containers (2), in which a pre-form (1) made of a thermoplastic material, following a thermal conditioning, is stretched within a blow mould (4) by means of a stretching rod (11) and is formed into the container (2) by means of the action of a blow-moulding pressure, and in which a definition of the positioning of the stretching rod (11) is done by means of a stretching rod drive, and in which the blow-moulding pressure is generated by means of at least one positionable blow gas feed, whereby the stretching rod drive is mechanically coupled, at least for part of the time, to the positionable blow gas feed in appropriate manner such that a joint motion is performed, **characterised in that** the mechanical coupling of the stretching rod drive and the positionable blow gas feed is effected by means of a catch (65) and a catch profile (64).

2. Method according to claim 1, **characterised in that** the stretching rod (11) is coupled to a control for definition of a stretching rod motion in accordance with a motion profile.

3. Method according to claim 1 or 2, **characterised in that** a positioning path of the stretching rod (11) is subdivided into a first region that is assigned to a joint positioning together with the blow gas feed and into a second region that is assigned exclusively to a positioning of the stretching rod (11).

4. Method according to any one of the claims 1 to 3, **characterised In that** the stretching rod (11) is positioned by means of a threaded rod (48).

5. Method according to any one of the claims 1 to 3, **characterised in that** the stretching rod (11) is positioned by means of a cam control.

6. Method according to any one of the claims 1 to 3, **characterised in that** the stretching rod (11) is positioned by means of a pneumatic drive.

7. Method according to any one of the claims 1 to 6, **characterised in that** the positionable blow gas feed is fixed by means of a toggle lever in an arrangement that is positioned in the direction towards the blow mould (4).

8. Method according to any one of the claims 1 to 6, **characterised In that** the positionable blow gas feed is fixed by means of a toggle lever in an arrangement that is positioned in a direction away from the blow mould (4).

9. Method according to any one of the claims 1 to 8, **characterised in that** a positioning path of the stretching rod (11) is stabilised by means of a carriage guide.

10. Method according to any one of the claims 1 to 9, **characterised in that** the catch (65) engages the catch profile (64) exclusively during a part of its motion path.

11. Method according to any one of the claims 1 to 10, **characterised in that** the catch profile (64) transforms a motion of the catch (65) into a motion of the positionable blow gas feed by means of an arrangement in the region of a control lever (62) that can be swivelled.

12. Apparatus for the blow moulding of containers (2) from a thermoplastic material that comprises at least one blow moulding station (3) provided with a blow mould (4) and is provided with a stretching facility, in the region of which a stretching rod (11) for application to a pre-form (1) that can be inserted into the blow mould (4) is arranged and in which the stretching rod (11) is connected to a stretching rod drive, and in which the blow moulding station (3) comprises a positionable blow gas feed, whereby the stretching rod drive is mechanically coupled to the positionable blow gas feed along at least a part of a positioning path, **characterised in that** the positionable blow gas feed and the stretching rod drive are coupled by means of a catch (65) that engages a catch profile (64).

13. Apparatus according to claim 12, **characterised in that** the stretching rod (11) is coupled to a controllable drive for implementing a motion process in accordance with a defined motion profile.

14. Apparatus according to claim 12 or 13, **characterised in that** a positioning path of the stretching rod (11) is subdivided into a first region and a second region, whereby the stretching rod (11) is mechanically coupled to the positionable blow gas feed in the first region and is uncoupled in the second region.

15. Apparatus according to any one of the claims 12 to 14, **characterised in that** the stretching rod drive comprises a threaded rod (48) that is supported such that it can rotate.

16. Apparatus according to any one of the claims 12 to 14, **characterised in that** the stretching rod drive comprises a cam control.

17. Apparatus according to any one of the claims 12 to 14, **characterised in that** the stretching rod drive comprises a pneumatic drive.

18. Apparatus according to any one of the claims 12 to 17, **characterised in that** the positionable blow gas feed is provided with a toggle lever for fixing the position in a condition positioned in the direction towards the blow mould (4).

19. Apparatus according to any one of the claims 12 to 18, **characterised In that** the positionable blow gas feed is provided with a toggle lever for fixing the position in a condition positioned in a direction away from the blow mould (4).

20. Apparatus according to any one of the claims 12 to 19, **characterised In that** the stretching system comprises a carriage guide.

21. Apparatus according to any one of the claims 12 to 20, **characterised in that** the catch profile (64) has a length that is shorter than the extension of a positioning path of the catch (65).

22. Apparatus according to any one of the claims 12 to 21, **characterised in that** the catch profile (64) Is arranged in the region of a control lever (62) that is supported such that it can swivel.

## Revendications

1. Procédé de moulage par soufflage de récipients (2) dans le cadre duquel une préforme (1) en un matériau thermoplastique, après un conditionnement thermique, est étirée par une barre d'étirage (11) à l'intérieur d'un moule de soufflage (4) et, sous l'action d'une pression de soufflage, transformée en un récipient (2), et dans le cadre duquel un positionnement défini de la barre d'étirage (11) est obtenu par la mise en oeuvre d'un entraînement de barre d'étirage, et dans le cadre duquel la pression de soufflage est produite à l'aide d'au moins une alimentation en gaz de soufflage positionnable, l'entraînement de barre d'étirage étant, temporairement au moins, couplé mécaniquement à l'alimentation en gaz de soufflage positionnable de façon à effectuer un mouvement commun, **caractérisé en ce que** le couplage mécanique entre l'entraînement de la barre d'étirage et l'alimentation en gaz de soufflage positionnable est réalisé au moyen d'un entraîneur (65) et d'un profil d'entraînement (64).

2. Procédé selon la revendication 1, **caractérisée en ce que** la barre d'étirage (11) est couplée à une commande définissant une course de la barre d'étirage conformément à un profil de mouvement.

3. Procédé selon la revendication 1 ou 2, **caractérisée en ce qu'**une course de positionnement de la barre d'étirage (11) est subdivisée en deux sections, une première section correspondant à un positionnement commun avec l'alimentation en gaz de soufflage et une seconde section exclusivement affectée au positionnement de la barre d'étirage (11).

4. Procédé selon l'une des revendications 1 à 3, **caractérisé en ce que** la barre d'étirage (11) est positionnée par une tige filetée (48).

5. Procédé selon l'une des revendications 1 à 3, **caractérisé en ce que** la barre d'étirage (11) est positionnée par une commande à came.

6. Procédé selon l'une des revendications 1 à 3, **caractérisé en ce que** la barre d'étirage (11) est positionnée par un entraînement pneumatique.

7. Procédé selon l'une des revendications 1 à 6, **caractérisé en ce que** l'alimentation en gaz de soufflage positionnable, une fois positionnée selon un agencement orienté vers le moule de soufflage (4), est fixée par un levier à genouillère.

8. Procédé selon l'une des revendications 1 à 6, **caractérisé en ce que** l'alimentation en gaz de soufflage positionnable, une fois positionnée selon un agencement opposé au moule de soufflage (4), est fixée par un levier à genouillère.

9. Procédé selon l'une des revendications 1 à 8, **caractérisé en ce qu'**une course de positionnement de la barre d'étirage (11) est stabilisée par une glissière.

10. Procédé selon l'une des revendications 1 à 9, **caractérisé en ce que** l'entraîneur (65) s'engage dans le profil d'entraînement (64) exclusivement pendant une partie de sa course.

11. Procédé selon l'une des revendications 1 à 10, **caractérisé en ce que** le profil d'entraînement (64), par un agencement dans la zone d'un levier de commande (62) pivotant, transforme un mouvement de l'entraîneur (65) en un mouvement de l'alimentation en gaz de soufflage positionnable.

12. Dispositif de moulage par soufflage de récipients (2) en un matériau thermoplastique présentant au moins une station de soufflage (3) munie d'un moule de soufflage (4) et doté d'un dispositif d'étirage dans la zone duquel est agencée une barre d'étirage (11) qui agit sur une préforme (1) pouvant être placée dans le moule de soufflage (4), et dont la barre d'étirage (11) est couplée à un entraînement de barre d'étirage et la station de soufflage (3) présente une alimentation en gaz de soufflage positionnable, l'entraînement de barre d'étirage étant, le long d'une partie au moins d'une course de positionnement, couplé mécaniquement avec l'alimentation en gaz de soufflage positionnable, **caractérisé en ce que** l'alimentation en gaz de soufflage positionnable et l'entraînement de barre d'étirage sont couplés par un entraîneur (65) qui s'engage dans un profil d'entraînement (64).

13. Dispositif selon la revendication 12, **caractérisée en ce que** la barre d'étirage (11) est couplée à un entraînement réglable en vue de réaliser une course conforme à un profil de mouvement défini.

14. Dispositif selon la revendication 12 ou 13, **caractérisé en ce que** une course de positionnement de la barre d'étirage (11) est subdivisée en une première et une seconde section, la barre d'étirage (11) étant, dans une première section, couplée mécaniquement à l'alimentation en gaz de soufflage positionnable et en étant découplée dans la seconde section.

15. Dispositif selon l'une des revendications 12 à 14, **caractérisé en ce que** l'entraînement de barre d'étirage présente une tige filetée (48) logée de façon à en permettre la rotation.

16. Dispositif selon l'une des revendications 12 à 14, **caractérisé en ce que** l'entraînement de barre d'étirage présente une commande à came.

17. Dispositif selon l'une des revendications 12 à 14, **caractérisé en ce que** l'entraînement de barre d'étirage présente un entraînement pneumatique.

18. Dispositif selon l'une des revendications 12 à 17, **caractérisé en ce que** l'alimentation en gaz de soufflage positionnable est munie d'un levier à genouillère pour fixer un positionnement en une position orientée vers le moule de soufflage (4).

19. Dispositif selon l'une des revendications 12 à 18, **caractérisé en ce que** l'alimentation en gaz de soufflage positionnable est munie d'un levier à genouillère pour fixer un positionnement en une position opposée au moule de soufflage (4).

20. Dispositif selon l'une des revendications 12 à 19, **caractérisé en ce que** le système d'étirage présente une glissière pour coulisseau.

21. Dispositif selon l'une des revendications 12 à 20, **caractérisé en ce que** le profil d'entraînement (64) a une longueur inférieure à l'étendue d'une course de positionnement de l'entraîneur (65).

22. Dispositif selon l'une des revendications 12 à 21, **caractérisé en ce que** le profil d'entraînement (64) est agencé dans la zone d'un levier de commande (62) logé de façon à pouvoir pivoter.
